# EUROPÄISCHE PATENTSCHRIFT

(11) **EP 2 244 078 B1**
(45) Veröffentlichungstag und Bekanntmachung des Hinweises auf die Patenterteilung: **22.06.2016**
(21) Anmeldenummer: 10160097.1
(22) Anmeldetag: 15.04.2010
(51) Int. Cl.: G01K 17/10, F24D 19/10

(54) **Wasser /Wärmezähler mit einem Gebergehäuse und Verfahren zur Herstellung eines Gebergehäuses**
Water/heat meter with a dispenser casing and method for producing a dispenser casing
Compteur d'eau/thermique doté d'un boîtier émetteur et procédé de fabrication d'un boîtier émetteur

(30) Priorität: 21.04.2009 DE 102009018056
(43) Veröffentlichungstag der Anmeldung: 27.10.2010
(73) Patentinhaber: QUNDIS GmbH, 99098 Erfurt (DE)
(72) Erfinder: Dobeneck, Wolfgang, 99996, Menteroda OT Urbach (DE); Coman, Catalin, 99974, Mühlhausen (DE); Gerner, René, 99974, Mühlhausen (DE)
(74) Vertreter: Liedtke, Markus

(56) Entgegenhaltungen:
- EP-A1- 1 039 269
- EP-A1- 2 012 096
- WO-A2-2004/085973
- DE-A1- 19 708 857
- DE-A1-102006 005 678
- US-A- 5 773 723

## Beschreibung

Die Erfindung betrifft einen Wasser-Wärmezähler mit einem Gebergehäuse nach den Merkmalen des Oberbegriffs des Anspruchs 1 und ein Verfahren zur Herstellung eines solchen Gebergehäuses.

Aus dem Stand der Technik sind Gehäuse für Wasserzähler oder Wärmezähler bzw. für deren Geber bekannt, welche aus Messing hergestellt und daher teuer sind. Des Weiteren sind Gehäuse bekannt, welche ausschließlich aus Kunststoff gefertigt sind. Deren Herstellung isgeändt kostengünstig möglich, allerdings ist die Marktakzeptanz dieser Kunststoffgehäuse gering, da sie für den Montageprozess sowie für eine Dauerbelastung in einer Rohrleitungsinstallation eine relativ geringe Festigkeit besitzen.

In der US 5,773,723 A wird ein Strömungsrohr mit Auskleidung beschrieben. Ein elektromagnetischer Durchflussmesser weist ein Rohr zum Führen eines Fluids entlang einer Längsachse auf. Das Rohr weist Flächen quer zu dieser Längsachse auf, welche an gegenüberliegenden Enden des Rohrs angeordnet sind. Eine Auskleidung auf der inneren Oberfläche des Rohrs erstreckt sich aus einem Ende des Rohrs und in eine Vertiefung in einer der Flächen, um die Auskleidung an Ort und Stelle zu verankern.

Aus der EP 1 039 269 A1 und der EP 2 012 096 A1 ist ein magnetisch-induktiver Durchflussaufnehmer bekannt. Der Durchflussaufnehmer umfasst ein Messrohr zum Führen eines Fluids, eine Magnetkreisanordnung zum Führen eines Magnetfelds und eine Sensoranordnung zum Abgreifen einer im Fluid induzierten Spannung. Die Magnetkreisanordnung weist Spulenkerne mit gewölbten Stirnflächen auf. Die Spulenkerne sind durch das äußere Trägerrohr des Messrohrs hindurch in einen Liner, in den ein Stützkörper eingebettet ist, stirnseitig und formschlüssig eingelassen. Zum Herstellen des Stützkörpers wird in das Trägerrohr Sinterbronze eingefüllt und darin in situ gesintert. Daran anschließend wird der Liner in das Trägerrohr durch ein Transfer-, Injection- oder Compression-Mold-Verfahren eingebracht.

In der DE 197 08 857 A1 wird ein magnetisch-induktives Durchflussmessgerät für strömende Medien beschrieben. Das Durchflussmessgerät umfasst ein Messrohr, einen Magnet zur Erzeugung eines zumindest im Wesentlichen senkrecht zur Messrohrachse verlaufenden Magnetfeldes und mindestens zwei entlang einer zumindest im Wesentlichen senkrecht zur Messrohrachse und zur Magnetfeldrichtung verlaufenden Verbindungslinie angeordnete Messelektroden. Der Magnet und die Messelektroden sind innerhalb der Messrohrwand angeordnet. Das Messrohr weist einen an den Innendurchmesser der angrenzenden Rohrleitungen angepassten Außendurchmesser und einen Befestigungsflansch auf.

Aus der DE 10 2006 005 678 A1 ist ein Wasserzähler bekannt. Der Wasserzähler umfasst ein Gehäuse mit einem Fluideinlass und einem Fluidauslass. In dem Gehäuse sind ein erster und ein zweiter Magnet angeordnet, die drehbar gelagert und durch eine Trennwand voneinander getrennt sind und zur Bildung einer Magnetkupplung zusammenwirken. Das Gehäuse ist auf einer Seite der Trennwand von durchfließendem Fluid durchströmt. Es ist ein Abschirmelement vorgesehen, das die Magnete in radialer Richtung umgibt. Ein Boden des Gehäuses weist auf der von Fluid durchströmten Seite der Trennwand eine Platte aus einem magnetisch abschirmenden Material auf.

In der WO 2004/085973 A2 wird ein Wasserzähler beschrieben, dessen Gehäuse aus Kunststoff besteht und einen Kern aus Metall mit mehreren Durchbrechungen aufweist. Der Wasserzähler umfasst ein Gebergehäuse und eine Messeinrichtung. Die Messeinrichtung umfasst einen Geber. Das Gebergehäuse ist ein Verbundteil aus einem Kunststoffteil und einem darin eingegossenen topfförmigen Kern aus Metall, der mehrere Durchbrechungen aufweist und allseitig mit Kunststoff umspritzt ist. Im Bereich eines Zulaufstutzens und eines Ablaufstutzens sind am Kern Ausstülpungen vorgesehen, die die Stutzen verstärken und vollständig vom Kunststoff umschlossen sind. In dem Kunststoffteil ist im Bereich des topfförmigen Kerns eine Messkammer für den Geber der Messeinrichtung ausgebildet.

Der Erfindung liegt die Aufgabe zu Grunde, einen Wasser-/Wärmezähler mit einem kostengünstigen und robusten Gebergehäuse und ein Verfahren zur kostengünstigen Herstellung eines robusten Gebergehäuses für einen Wasser-/Wärmezähler anzugeben.

Die Aufgabe wird erfindungsgemäß gelöst durch einen Wasser-/Wärmezähler mit einem Gebergehäuse mit den Merkmalen des Anspruchs 1 und ein Verfahren zur Herstellung eines Gebergehäuses für einen Wasser-/Wärmezähler mit den Merkmalen des Anspruchs 8.

Vorteilhafte Ausgestaltungen der Erfindung sind Gegenstand der Unteransprüche.

Ein erfindungsgemäßer Wasser-/Wärmezähler weist ein Gebergehäuse und eine Messeinrichtung auf, wobei die Messeinrichtung einen Geber umfasst.

Das Gebergehäuse ist ein Verbundteil aus einem Kunststoffteil und einem teilweise darin eingegossenen Metallrohr. Dieses Gebergehäuse und somit auch der Wasser-/Wärmezähler sind kostengünstig herstellbar. Dazu ist das Metallrohr vorzugsweise aus Stahl gefertigt und somit wesentlich preiswerter als Messing, aus welchem Gehäuse nach dem Stand der Technik gefertigt sind. Durch das Metallrohr weist das Gebergehäuse weiterhin die vorteilhaften Eigenschaften reiner Metallgehäuse auf, wie ein robustes Montageverhalten und eine große Dauerbelastbarkeit gegenüber Kräften und Drehmomenten in einem Rohrleitungssystem.

Eine Wandung des Metallrohrs weist eine Öffnung auf, welche von dem Kunststoffteil umschlossen ist. Erfindungsgemäß ist im Bereich dieser Öffnung in dem Kunststoffteil eine Messkammer für den Geber der Messeinrichtung ausgebildet, so dass ein in das Metallrohr einfließender Wasserstrom an dieser Öffnung in die Messkammer umlenkbar ist und aus der Messkammer auch wieder in das Metallrohr einströmen kann.

Das Kunststoffteil weist vorzugsweise eine Ausformung zur Aufnahme der Messeinrichtung des Wasser-/Wärmezählers auf, so dass dieser auf das Kunststoffteil aufsetzbar ist und an diesem befestigbar ist, wobei der Geber der Messeinrichtung in der Messkammer positioniert ist. Durch Befestigung der Messeinrichtung auf dem Kunststoffteil ist die Messkammer wasserdicht verschlossen, so dass kein Wasser aus dem Rohrleitungssystem austreten kann.

Der Kunststoff des Kunststoffteils bedeckt eine Innenwandung des Metallrohres vollständig und Stirnflächen des Metallrohrs, ausgehend von der Innenwandung in Richtung einer Außenwandung des Metallrohrs, zumindest teilweise, bevorzugt vollständig. Auf diese Weise bildet der Kunststoff eine geschlossene innere Auskleidung des Metallrohrs, so dass im eingebauten Zustand durchströmendes Wasser keinerlei Kontakt mit dem Metallrohr hat. Dadurch sind eine Korrosion und ein Verschleiß des Metallrohrs und eine Beeinflussung einer Wasserqualität durch das Metallrohr verhindert.

In einer vorteilhaften Ausführungsform ist in dem Kunststoffteil im Bereich der Öffnung des Metallrohrs eine Aufnahme für einen Temperatursensor ausgebildet. Auf diese Weise ist das Gebergehäuse sowohl für Wasserzähler einsetzbar, welche keine Temperatursensoren benötigen, als auch für Wärmezähler. Derartige Wärmezähler sind beispielsweise in Heizanlagen im Einsatz zur Ermittlung einer verbrauchten Wärmemenge, aber zum Beispiel auch in Kühlanlagen als Kältezähler oder negative Wärmezähler.

Der Wärmezähler ist beispielsweise in einem Vorlauf oder, bevorzugt, in einem Rücklauf einer Heizungsanlage installiert, wobei anhand einer ermittelten Wasserdurchflussmenge und eines Temperaturunterschiedes zwischen dem Vorlauf und dem Rücklauf eine abgegebene Wärmemenge ermittelbar ist. Dafür sind zwei Temperatursensoren erforderlich, ein Temperatursensor im Vorlauf zur Ermittlung einer Vorlauftemperatur und ein Temperatursensor im Rücklauf zur Ermittlung einer Rücklauftemperatur. Einer dieser beiden Temperatursensoren ist in das Gebergehäuse integriert.

In diesem Gebergehäuse ist der Temperatursensor, im Gegensatz zum Stand der Technik, im Kunststoffteil angeordnet und somit durch den Kunststoff von dem gut Wärme leitenden und mit einer Umgebung in Kontakt stehenden Metallrohr

thermisch isoliert. Dadurch ist der Temperatursensor wesentlich besser an das durchströmende Wasser bzw. Medium thermisch gekoppelt und eine Temperaturermittlung ist unbeeinflusst von Umgebungstemperaturen des Gebergehäuses. Dadurch ist eine wesentlich exaktere Temperaturermittlung und somit eine wesentlich genauere Bestimmung der abgegebenen Wärmemenge ermöglicht.

Der Temperatursensor ist im Kunststoffteil beispielsweise mittels eines Schnellverschlusses befestigbar, so dass keine weiteren Befestigungsmittel wie beispielsweise im Stand der Technik verwendete zweigeteilte Klappmuttern notwendig sind, welche einem Verschleiß unterliegen und dadurch eine Wartung bzw. einen Austausch des Temperatursensors nach längerer Einsatzzeit erschweren. Dadurch ist eine Kosteneinsparung und eine erleichterte Wartung bzw. ein erleichterter Austausch des Temperatursensors ermöglicht.

Zweckmäßigerweise weist das Metallrohr an beiden Enden ein Mittel zum Anschluss an ein Rohrleitungssystem auf. Dieses Mittel ist bevorzugt ein Gewinde, welches vorteilhafterweise an der Außenwandung des Metallrohrs angeordnet ist. Auf diese Weise ist das Gebergehäuse problemlos in ein Rohrleitungssystem integrierbar, wobei Kräfte und Momente während eines Einbaus des Gebergehäuses bzw. des gesamten Wasser-/Wärmezählers ausschließlich auf das Metallrohr einwirken, so dass eine Beschädigung des Kunststoffteils ausgeschlossen ist.

In einem Verfahren zur Herstellung eines Gebergehäuses für einen Wasser-/Wärmezähler wird erfindungsgemäß in eine Wandung eines Metallrohres, insbesondere eines Stahlrohres, eine Öffnung eingebracht und dieses Metallrohr in eine Spritzgussform eingebracht, in welcher es mit Kunststoff teilweise umspritzt wird. Das Verfahren ist standardisierbar, so dass eine gute Reproduzierbarkeit gegeben ist. Dadurch wird eine kostengünstige Massenfertigung robuster Gebergehäuse ermöglicht, wodurch sowohl eine effiziente Produktion als auch eine optimale und kostengünstige Qualitätssicherung der Gebergehäuse ermöglicht wird.

Die Öffnung im Metallrohr wird vorzugsweise ausgefräst und/oder ausgestanzt, so dass eine maschinelle und qualitativ hochwertige Bearbeitung des Metallrohrs ermöglicht ist.

Bevorzugt wird an beiden Enden des Metallrohres ein Gewinde in eine Außenwandung des Metallrohrs eingebracht, wodurch das Gebergehäuse in ein Rohrleitungssystem integrierbar ist. Auftretende Kräfte und Momente während einer Installation wirken dabei ausschließlich auf das Metallrohr, wodurch der Kunststoff nicht beschädigt wird.

Erfindungsgemäß wird das Metallrohr in der Spritzgussform derart mit Kunststoff umspritzt, dass sich ein Kunststoffteil ausbildet, welches die Öffnung im Metallrohr umschließt, eine Innenwandung des Metallrohrs vollständig bedeckt und Stirnflächen des Metallrohrs, ausgehend von der Innenwandung in Richtung einer Außenwandung, zumindest teilweise bedeckt. Auf diese Weise wird kostengünstig ein robustes Gebergehäuse produziert, wobei während des Spritzgießens eine Messkammer, eine Ausformung zur Aufnahme des Wasser-/Wärmezählers und, wenn erforderlich, eine Aufnahme für einen Temperatursensor in dem Kunststoffteil in einem Arbeitsgang realisiert werden. Da das Kunststoffteil einstückig ausgebildet ist und das Metallrohr vollständig auskleidet, kommt durchströmendes Wasser nicht mit dem Metallrohr in Kontakt, wodurch eine Korrosion und ein Verschleiß des Metallrohrs, eine Beeinträchtigung der Wasserqualität und, aufgrund der isolierenden Wirkung des Kunststoffs, auch eine Temperaturbeeinflussung des Temperatursensors durch Umgebungstemperaturen des Gebergehäuses vermieden werden.

Ausführungsbeispiele der Erfindung werden im Folgenden anhand von Zeichnungen näher erläutert.

Darin zeigen:
- Figur 1: eine perspektivische Darstellung eines Metallrohrs,
- Figur 2: eine perspektivische Darstellung eines Gebergehäuses,
- Figur 3: eine Schnittdarstellung des Gebergehäuses, und
- Figur 4: eine perspektivische Darstellung eines Wasser-/Wärmezählers.

Einander entsprechende Teile sind in allen Figuren mit den gleichen Bezugszeichen versehen.

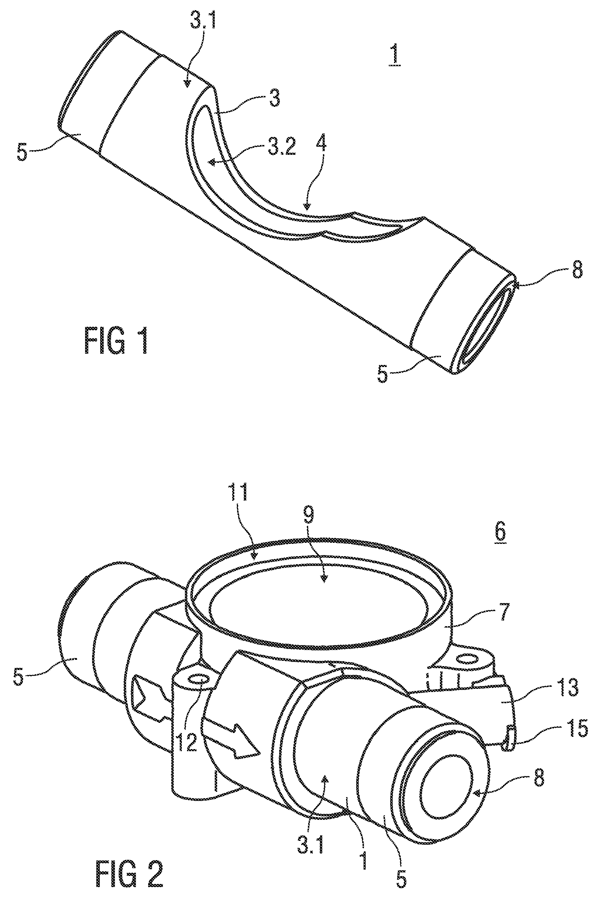

**Figur 1** zeigt eine perspektivische Darstellung eines Metallrohrs 1. Das Metallrohr 1 ist vorzugsweise aus Stahl gefertigt, da Stahl wesentlich kostengünstiger ist und wesentlich geringeren Preisschwankungen unterworfen ist als Messing, welches im Stand der Technik für Wasser-/Wärmezähler 2 verwendet wird. Eine Wandung 3 des Metallrohrs 1 weist, vorzugsweise etwa in der Mitte einer Längsausdehnung des Metallrohrs 1, eine Öffnung 4 auf. Diese Öffnung 4 wird in das Metallrohr 1 beispielsweise maschinell eingestanzt und/oder eingefräst.

An beiden Enden weist das Metallrohr 1 als Mittel zum Anschluss an ein Rohrleitungssystem jeweils ein an einer Außenwandung 3.1 des Metallrohrs 1 angeordnetes Gewinde 5 auf, welches beispielsweise in die Außenwandung 3.1 eingeschnitten ist.

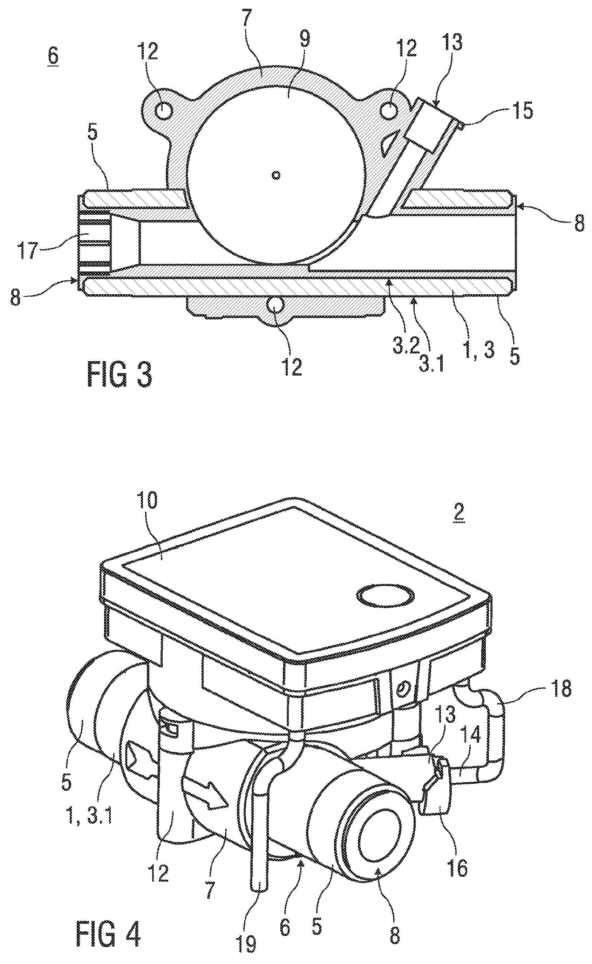

Dieses derart bearbeitete Metallrohr 1 wird in eine Spritzgussform eingelegt und die Spritzgussform mit Kunststoff ausgegossen bzw. ausgespritzt, so dass, kostengünstig und in Massenproduktion herstellbar, ein in **Figur 2** dargestelltes Gebergehäuse 6 entsteht. Dieses Gebergehäuse 6 ist in **Figur 3** im Querschnitt dargestellt.

Das Gebergehäuse 6 ist ein Verbundteil aus einem einstückig ausgebildeten Kunststoffteil 7 und dem darin teilweise eingegossenen Metallrohr 1. Die Öffnung 4 im Metallrohr 1 ist von dem Kunststoffteil 7 vollständig umschlossen. Des Weiteren ist, wie in Figur 3 deutlich zu erkennen, eine Innenwandung 3.2 des Metallrohrs 1 vollständig von dem Kunststoff des Kunststoffteils 7 bedeckt. Der Kunststoff erstreckt sich auch über Stirnflächen 8 des Metallrohrs 1 in Richtung der Außenwandung 3.1 bis zu den dort in die Außenwandung 3.1 eingebrachten Gewinden 5. Auf diese Weise kommt das Metallrohr 1, wenn das Gebergehäuse 6 in einem Rohrleitungssystem installiert ist, nicht mit einem durchströmenden Medium, welches beispielsweise Wasser ist, in Berührung. Dadurch sind eine Korrosion des Metallrohrs 1 und eine Beeinträchtigung der Wasserqualität vermieden. Somit ist ein Metallrohr 1 aus einem kostengünstigen Metall, beispielsweise aus Stahl, einsetzbar.

Durch das Metallrohr 1, dessen Außenwandung 3.1 lediglich teilweise von dem Kunststoffteil 7 bedeckt ist, weist das Gebergehäuse 6 weiterhin vorteilhafte Eigenschaften reiner Metallgehäuse auf, wie ein robustes Montageverhalten und eine große Dauerbelastbarkeit gegenüber Kräften und Drehmomenten in dem Rohrleitungssystem, in welches es installiert wird. Über die robusten Gewinde 5 des Metallrohres 1 ist es fest in das Rohrleitungssystem einschraubbar, wobei Werkzeug an das Metallrohr 1 ansetzbar ist, ohne das Kunststoffteil 7 zu beschädigen, da keinerlei Kräfte und Drehmomente auf dieses einwirken.

In dem Kunststoffteil 7 ist im Bereich der Öffnung 4 des Metallrohrs 1 eine Messkammer 9 für einen Geber einer Messeinrichtung 10 des Wasser-/Wärmezählers 2 ausgebildet, so dass ein in das mit Kunststoff ausgekleidete Metallrohr 1 einfließender Wasserstrom an dieser Öffnung 4 in die Messkammer 9 umlenkbar ist und aus der Messkammer 9 auch wieder in das mit Kunststoff ausgekleidete Metallrohr 1 einströmen kann.

Oberhalb der Messkammer 9 weist das Kunststoffteil 7 eine Ausformung 11 zur Aufnahme der Messeinrichtung 10 auf, so dass diese auf das Kunststoffteil 7 aufsetzbar ist und an diesem befestigbar ist, im hier dargestellten Ausführungsbeispiel durch eine Verschraubung 12 mit dem Kunststoffteil 7. Der Geber der Messeinrichtung 10 ist dabei in der Messkammer 9 positioniert. Durch Befestigung der Messeinrichtung 10 auf dem Kunststoffteil 7, gegebenenfalls unter Verwendung einer Dichtung, ist die Messkammer 9 wasserdicht und druckfest verschlossen, so dass kein Wasser bzw. kein das Rohrleitungssystem durchströmendes Medium aus diesem austreten kann.

Die hier dargestellte Form des Gebergehäuses 6 stellt nur eine mögliche Ausführungsform dar. Das Gebergehäuse 6 und insbesondere das Kunststoffteil 7 sind problemlos, beispielsweise durch eine geänderte Spritzgussform, an verschiedene Wasser-/Wärmezähler 2 bzw. deren Messeinrichtungen 10, d. h. an verschiedene Ausformungen und Funktionsweisen anpassbar. So ist das Gebergehäuse 6 beispielsweise für Einstrahl-Flügelradwasserzähler, Mehrstrahl-Flügelradwasserzähler, Scheibenzähler, Ringkolbenzähler, Woltmannzähler, Ultraschallzähler, magnetisch induktive Wasserzähler und weitere Arten von Wasser-/Wärmezählern 2 einsetzbar, wobei die Messkammer 9 aus Kunststoff für einige Wasserzählerarten oder Wärmezählerarten besonders vorteilhaft bzw. erforderlich ist.

In der hier dargestellten Ausführungsform ist das Gebergehäuse 6 insbesondere für einen Wärmezähler ausgebildet, da in dem Kunststoffteil 7 im Bereich der Öffnung 4 des Metallrohrs 1 eine Aufnahme 13 für einen Temperatursensor 14 ausgebildet ist. Für einen ausschließlichen Wasserzähler ist ein solcher Temperatursensor 14 nicht erforderlich, weshalb die Spritzgussform für das entsprechende Gebergehäuse 6 entsprechend angepasst wäre, so dass diese Aufnahme 13 für den Temperatursensor 14 während des Spritzgusses nicht ausgebildet würde.

Die Aufnahme 13 für den Temperatursensor 14 ist als Durchführung durch das Kunststoffteil 7 ausgebildet, so dass der Temperatursensor 14 von außen einführbar und im Wasserstrom platzierbar ist. Er ist beispielsweise mittels eines Schnellverschlusses im Kunststoffteil 7 arretierbar, wobei diese Durchführung im Kunststoffteil 7 gleichzeitig beispielsweise mittels eines Dichtungsrings abgedichtet ist, so dass ein Wasseraustritt aus dem Gebergehäuse 6 verhindert ist.

Der Schnellverschluss ist in der hier dargestellten Ausführungsform ähnlich eines Bajonettverschlusses ausgebildet und umfasst einen Steg 15 am Kunststoffteil 7 an einem äußeren Rand der Aufnahme 13 für den Temperatursensor 14 und eine Kappe 16 am Temperatursensor 14 mit einer mit dem Steg 15 korrespondierenden, nicht näher dargestellten Nut, so dass nach Einführen des Temperatursensors 14 in die Aufnahme 13 die Kappe 16 leicht verdrehbar ist und durch Eingreifen des Stegs 15 in die Nut der Kappe 16 der Temperatursensor 14 arretiert ist. Das Gebergehäuse 6 ist vorzugsweise mittels der Dichtung zwischen dem Temperatursensor 14 und dem Kunststoffteil 7 bzw. zwischen der Kappe 16 und dem Kunststoffteil 7 wasserdicht und druckfest abdichtbar.

Durch einen solchen Schnellverschluss sind keine weiteren Befestigungsmittel wie beispielsweise im Stand der Technik verwendete zweigeteilte Klappmuttern notwendig, welche einem Verschleiß unterliegen und dadurch eine Wartung bzw. einen Austausch des Temperatursensors 14 nach längerer Einsatzzeit erschweren. Dadurch ist eine Kosteneinsparung und eine erleichterte Wartung bzw. ein erleichterter Austausch des Temperatursensors 14 ermöglicht.

Durch eine derartige Anordnung des Temperatursensors 14 im Kunststoffteil 7 ist dieser durch den Kunststoff von dem gut Wärme leitenden und mit einer Umgebung des Gebergehäuses 6 in Kontakt stehenden Metallrohr 1 thermisch isoliert. Dadurch ist der Temperatursensor 14 wesentlich besser an das durchströmende Wasser bzw. Medium thermisch gekoppelt und eine Temperaturermittlung ist von Umgebungstemperaturen des Gebergehäuses 6 unbeeinflusst. Dadurch ist eine wesentlich exaktere Temperaturermittlung ermöglicht.

An einem Ende des Metallrohrs 1 ist, wie in Figur 3 dargestellt, ein Einlasssieb 17 integriert, welches beispielsweise während des Druckgussverfahrens in der Gussform angeordnet und somit in den Kunststoff eingegossen ist oder nach dem Druckgießen in diese Position einschiebbar ist. Dieses Einlasssieb 17 filtert Schmutzpartikel aus dem einströmenden Wasser bzw. Medium und dient des Weiteren zu einer Linearisierung der Strömung, so dass eine ordnungsgemäße Funktion des Wasser-/Wärmezählers 2 sichergestellt ist.

In Figur 4 ist der Wasser-/Wärmezähler 2 mit der in den Figuren 2 und 3 dargestellten Ausführungsform des Gebergehäuses 6 dargestellt. Die Messeinrichtung 10 ist auf das Gebergehäuse 6 aufgesetzt und festgeschraubt, wodurch die Messkammer 9 des Gebergehäuses 6 wasserdicht und druckfest verschlossen ist.

Der Temperatursensor 14, welcher in der Aufnahme 13 im Kunststoffteil 7 angeordnet ist, ist mit einem ersten Sensoreingang 18 an der Messeinrichtung 10 verbunden, d. h. bei dem hier dargestellten Wasser-/Wärmezähler 2 handelt es sich insbesondere um einen Wärmezähler, welcher beispielsweise in einer Heizungsanlagen zur Ermittlung einer verbrauchten Wärmemenge einsetzbar ist. Ein solcher Wärmezähler ist beispielsweise in einem Vorlauf oder, bevorzugt, in einem Rücklauf der Heizungsanlage installiert, da eine Temperaturbelastung des Wärmezählers im Rücklauf geringer ist.

Anhand einer ermittelten Wasserdurchflussmenge und eines Temperaturunterschiedes zwischen dem Vorlauf und dem Rücklauf ist eine abgegebene Wärmemenge ermittelbar. Dafür sind zwei Temperatursensoren 14 erforderlich, der hier dargestellte Temperatursensor 14 im Gebergehäuse 6 zur Ermittlung einer Rücklauftemperatur und ein weiterer, nicht näher dargestellter Temperatursensor im Vorlauf der Heizungsanlage zur Ermittlung einer Vorlauftemperatur, wobei der hier dargestellte Temperatursensor 14 mit dem ersten Sensoreingang 18 der Messeinrichtung 10 und der nicht dargestellte zweite Temperatursensor mit einem zweiten Sensoreingang 19 der Messeinrichtung 10 verbunden ist. Die Messeinrichtung 10 ermittelt eine Temperaturdifferenz, eine Durchflussmenge und daraus die abgegebene Wärmemenge.

Das Gebergehäuse 6 des Wasser-/Wärmezählers 2 ist in einem Rohrleitungssystem installierbar, wobei nicht von Kunststoff bedeckte Bereiche der Außenwandung 3.1 des Metallrohrs 1 als Angriffsfläche für Werkzeuge während der Installation nutzbar sind. Auf diese Weise ist der Wasser-/Wärmezähler 2 über dessen Gebergehäuse 6 fest, insbesondere druckfest und wasserdicht mit dem Rohrleitungssystem verbindbar, ohne den Wasser-/Wärmezähler 2, d. h. insbesondere das Kunststoffteil 7 und die Messeinrichtung 10 durch auftretende Kräfte und Drehmomente zu beschädigen.

### BEZUGSZEICHENLISTE

- 1: Metallrohr
- 2: Wasser-/Wärmezähler
- 3: Wandung
- 3.1: Außenwandung
- 3.2: Innenwandung
- 4: Öffnung
- 5: Gewinde
- 6: Gebergehäuse
- 7: Kunststoffteil
- 8: Stirnfläche
- 9: Messkammer
- 10: Messeinrichtung
- 11: Ausformung
- 12: Verschraubung
- 13: Aufnahme
- 14: Temperatursensor
- 15: Steg
- 16: Kappe
- 17: Einlasssieb
- 18: erster Sensoreingang
- 19: zweiter Sensoreingang

## Patentansprüche

1. Wasser-/Wärmezähler (2) mit einem Gebergehäuse (6) und einer Messeinrichtung (10), wobei die Messeinrichtung (10) einen Geber umfasst, wobei das Gebergehäuse (6) ein Verbundteil aus einem Kunststoffteil (7) und einem teilweise darin eingegossenen Metallrohr (1) ist, wobei eine Wandung (3) des Metallrohrs (1) eine Öffnung (4) aufweist, welche von dem Kunststoffteil (7) umschlossen ist und wobei der Kunststoff des Kunststoffteils (7) eine Innenwandung (3.2) des Metallrohres (1) vollständig bedeckt und Stirnflächen (8) des Metallrohrs (1), ausgehend von der Innenwandung (3.2) in Richtung einer Außenwandung (3.1) des Metallrohrs (1), zumindest teilweise bedeckt, wobei in dem Kunststoffteil (7) im Bereich der Öffnung (4) des Metallrohrs (1) eine Messkammer (9) für den Geber der Messeinrichtung (10) derart ausgebildet ist, dass sich die Messkammer (9) durch die Öffnung (4) des Metallrohrs (1) hindurch aus dem Metallrohr (1) heraus erstreckt und ein in das mit Kunststoff ausgekleidete Metallrohr (1) einfließender Wasserstrom an dieser Öffnung (4) in die Messkammer (9) umlenkbar ist und aus der Messkammer (9) wieder in das Metallrohr (1) einströmen kann.

2. Wasser-/Wärmezähler (2) nach Anspruch 1,
**dadurch gekennzeichnet, dass** das Kunststoffteil (7) eine Ausformung (11) zur Aufnahme der Messeinrichtung (10) aufweist.

3. Wasser-/Wärmezähler (2) nach einem der vorhergehenden Ansprüche,
**dadurch gekennzeichnet, dass** in dem Kunststoffteil (7) im Bereich der Öffnung (4) des Metallrohrs (1) eine Aufnahme (13) für einen Temperatursensor (14) ausgebildet ist.

4. Wasser-/Wärmezähler (2) nach einem der vorhergehenden Ansprüche,
**dadurch gekennzeichnet, dass** das Metallrohr (1) aus Stahl ist.

5. Wasser-/Wärmezähler (2) nach einem der vorhergehenden Ansprüche,
**dadurch gekennzeichnet, dass** das Metallrohr (1) an beiden Enden ein Mittel zum Anschluss an ein Rohrleitungssystem aufweist.

6. Wasser-/Wärmezähler (2) nach Anspruch 5,
**dadurch gekennzeichnet**, dieses Mittel ein Gewinde (5) ist.

7. Wasser-/Wärmezähler (2) nach Anspruch 6,
**dadurch gekennzeichnet, dass** das Gewinde (5) an der Außenwandung (3.1) des Metallrohrs (1) angeordnet ist.

8. Verfahren zur Herstellung eines Gebergehäuses (6) für einen Wasser-/Wärmezähler (2) nach einem der Ansprüche 1 bis 7, wobei in eine Wandung (3) eines Metallrohres (1), insbesondere eines Stahlrohres, eine Öffnung (4) eingebracht wird und dieses Metallrohr (1) in eine Spritzgussform eingebracht wird, in welcher es mit Kunststoff teilweise umspritzt wird, wobei das Metallrohr (1) in der Spritzgussform derart mit Kunststoff umspritzt wird, dass sich ein Kunststoffteil (7) ausbildet, welches die Öffnung (4) im Metallrohr (1) umschließt, eine Innenwandung (3.2) des Metallrohrs (1) vollständig bedeckt und Stirnflächen (8) des Metallrohrs (1), ausgehend von der Innenwandung (3.2) in Richtung einer Außenwandung (3.1), zumindest teilweise bedeckt, wobei in dem Kunststoffteil (7) im Bereich der Öffnung (4) des Metallrohrs (1) eine Messkammer (9) für den Geber der Messeinrichtung (10) derart ausgebildet wird, dass sich die Messkammer (9) durch die Öffnung (4) des Metallrohrs (1) hindurch aus dem Metallrohr (1) heraus erstreckt und ein in das mit Kunststoff ausgekleidete Metallrohr (1) einfließender Wasserstrom an dieser Öffnung (4) in die Messkammer (9) umlenkbar ist und aus der Messkammer (9) wieder in das Metallrohr (1) einströmen kann.

9. Verfahren nach Anspruch 8,
**dadurch gekennzeichnet, dass** die Öffnung (4) ausgefräst und/oder ausgestanzt wird.

10. Verfahren nach Anspruch 8 oder 9,
**dadurch gekennzeichnet, dass** an beiden Enden des Metallrohres (1) ein Gewinde (5) in eine Außenwandung (3.1) des Metallrohrs (1) eingebracht wird.

## Claims

1. Water/heat meter (2) with a transmitter housing (6) and a measuring device (10), wherein the measuring device (10) comprises a transmitter, wherein the transmitter housing (6) is a composite part made up of a plastic part (7) and a metal tube (1) partially moulded therein, wherein a wall (3) of the metal tube (1) has an opening (4), which is enclosed by the plastic part (7), and wherein the plastic of the plastic part (7) completely covers an inner wall (3.2) of the metal tube (1) and at least partially covers end faces (8) of the metal tube (1), extending from the inner wall (3.2) in the direction of an outer wall (3.1) of the metal tube (1), wherein a measuring chamber (9) for the transmitter of the measuring device (10) is formed in the plastic part (7), in the region of the opening (4) of the metal tube (1), in such a way that the measuring chamber (9) extends through the opening (4) of the metal tube (1) out of the metal tube (1) and a stream of water flowing into the plastic-lined metal tube (1) is divertible at this opening (4) into the measuring chamber (9) and can flow out of the measuring chamber (9) again into the metal tube (1).

2. Water/heat meter (2) according to Claim 1,
**characterized in that** the plastic part (7) has a moulded recess (11) for receiving the measuring device (10).

3. Water/heat meter (2) according to one of the preceding claims,
**characterized in that** a receptacle (13) for a temperature sensor (14) is formed in the plastic part (7), in the region of the opening (4) of the metal tube (1).

4. Water/heat meter (2) according to one of the preceding claims,
**characterized in that** the metal tube (1) is made of steel.

5. Water/heat meter (2) according to one of the preceding claims,
**characterized in that** the metal tube (1) has at both ends a means for connection to a pipeline system.

6. Water/heat meter (2) according to Claim 5,
**characterized in that** this means is a thread (5).

7. Water/heat meter (2) according to Claim 6,
**characterized in that** the thread (5) is arranged on the outer wall (3.1) of the metal tube (1).

8. Method for producing a transmitter housing (6) for a water/heat meter (2) according to one of Claims 1 to 7, wherein an opening (4) is made in a wall (3) of a metal tube (1), in particular a steel tube, and this metal tube (1) is introduced into an injection mould, in which it is partially encapsulated with plastic, wherein the metal tube (1) is encapsulated with plastic in the injection mould in such a way as to form a plastic part (7), which encloses the opening (4) in the metal tube (1), completely covers an inner wall (3.2) of the metal tube (1) and at least partially covers end faces (8) of the metal tube (1), extending from the inner wall (3.2) in the direction of an outer wall (3.1), wherein a measuring chamber (9) for the transmitter of the measuring device (10) is formed in the plastic part (7), in the region of the opening (4) of the metal tube (1), in such a way that the measuring chamber (9) extends through the opening (4) of the metal tube (1) out of the metal tube (1) and a stream of water flowing into the plastic-lined metal tube (1) is divertible at this opening (4) into the measuring chamber (9) and can flow out of the measuring chamber (9) again into the metal tube (1).

9. Method according to Claim 8,
**characterized in that** the opening (4) is milled out and/or punched out.

10. Method according to Claim 8 or 9,
**characterized in that** a thread (5) is introduced into an outer wall (3.1) of the metal tube (1) at both ends of the metal tube (1).

## Revendications

1. Compteur d'eau/de chaleur (2) doté d'un boîtier émetteur (6) et d'un dispositif de mesure (10), dans lequel le dispositif de mesure (10) comprend un émetteur, dans lequel le boîtier d'émetteur (6) est une pièce composite constituée d'une pièce en matière plastique (7) et d'un tube métallique (1) partiellement moulé dans celle-ci, dans lequel une paroi (3) du tube métallique (1) présente une ouverture (4), qui est cernée par la pièce en matière plastique (7) et dans lequel la matière plastique de la pièce en matière plastique (7) recouvre entièrement une paroi intérieure (3.2) du tube métallique (1) et recouvre au moins partiellement des faces frontales (8) du tube métallique (1), à partir de la paroi intérieure (3.2) en direction d'une paroi extérieure (3.1) du tube métallique (1), dans lequel une chambre de mesure (9) destinée à l'émetteur du dispositif de mesure (10) est formée dans la pièce en matière plastique (7), dans la région de l'ouverture (4) du tube métallique (1), de telle manière que la chambre de mesure (9) s'étende à l'extérieur du tube métallique (1) à travers l'ouverture (4) du tube métallique (1) et qu'un flux d'eau pénétrant dans le tube métallique (1) revêtu de matière plastique puisse être dévié à cette ouverture (4) dans la chambre de mesure (9) et puisse de nouveau s'écouler dans le tube métallique (1) à partir de la chambre de mesure (9).

2. Compteur d'eau/de chaleur (2) selon la revendication 1, **caractérisé en ce que** la pièce en matière plastique (7) présente une partie façonnée (11) destinée à recevoir le dispositif de mesure (10).

3. Compteur d'eau/de chaleur (2) selon l'une quelconque des revendications précédentes, **caractérisé en ce qu'**un logement (13) destiné à un capteur de température (14) est formé dans la pièce en matière plastique (7) dans la région de l'ouverture (4) du tube métallique (1).

4. Compteur d'eau/de chaleur (2) selon l'une quelconque des revendications précédentes, **caractérisé en ce que** le tube métallique (1) est en acier.

5. Compteur d'eau/de chaleur (2) selon l'une quelconque des revendications précédentes, **caractérisé en ce que** le tube métallique (1) présente aux deux extrémités un moyen de raccordement à un système de canalisations.

6. Compteur d'eau/de chaleur (2) selon la revendication 5, **caractérisé en ce que** ce moyen est un filet (5).

7. Compteur d'eau/de chaleur (2) selon la revendication 6, **caractérisé en ce que** le filet (5) est disposé sur la paroi extérieure (3.1) du tube métallique (1).

8. Procédé de fabrication d'un boîtier émetteur (6) pour un compteur d'eau/de chaleur (2) selon l'une quelconque des revendications 1 à 7, dans lequel on pratique une ouverture (4) dans une paroi (3) d'un tube métallique (1), en particulier un tube en acier, et on introduit ce tube métallique (1) dans un moule de coulée par injection, dans lequel il est partiellement enrobé de matière plastique, dans lequel on enrobe le tube métallique (1) avec une matière plastique dans le moule de coulée par injection, de telle manière qu'il se forme une pièce en matière plastique (7), qui cerne l'ouverture (4) dans le tube métallique (1), recouvre entièrement une paroi intérieure (3.2) du tube métallique (1) et recouvre au moins partiellement des faces frontales (8) du tube métallique (1), à partir de la paroi intérieure (3.2) en direction d'une paroi extérieure (3.1), dans lequel on forme dans la pièce en matière plastique (7), dans la région de l'ouverture (4) du tube métallique (1), une chambre de mesure (9) destinée à l'émetteur du dispositif de mesure (10), de telle manière que la chambre de mesure (9) s'étende à l'extérieur du tube métallique (1) à travers l'ouverture (4) du tube métallique (1) et qu'un flux d'eau pénétrant dans le tube métallique (1) revêtu de matière plastique puisse être dévié à cette ouverture (4) dans la chambre de mesure (9) et puisse de nouveau s'écouler dans le tube métallique (1) à partir de la chambre de mesure (9).

9. Procédé selon la revendication 8, **caractérisé en ce que** l'on forme l'ouverture (4) par fraisage et/ou par découpage.

10. Procédé selon la revendication 8 ou 9, **caractérisé en ce que** l'on taille un filet (5) dans une paroi extérieure (3.1) du tube métallique (1) aux deux extrémités du tube métallique (1).
